# EUROPEAN PATENT SPECIFICATION

(11) **EP 0 611 459 B1**
(45) Date of publication and mention of the grant of the patent: **18.09.1996**
(21) Application number: 92922685.0
(22) Date of filing: 29.10.1992
(51) Int. Cl.: G05B 19/4099

(54) **A REAL TIME TOOL WORKING SYSTEM, IN PARTICULAR A GRINDING SYSTEM**
ECHTZEIT WERKZEUGARBEITSSYSTEM, INSBESONDERE FÜR EIN SCHLEIFSYSTEM
SYSTEME D'USINAGE EN TEMPS REEL, NOTAMMENT UN SYSTEME DE MEULAGE

(30) Priority: 06.11.1991 IT TO910839
(43) Date of publication of application: 24.08.1994
(73) Proprietor: FIAT AUTO S.p.A., I-10135 Torino (IT)
(72) Inventor: RINAUDO, Andrea, I-10050 S. Antonino di Susa (IT); PETRUCCELLI, Liberato, I-10046 Poirino (IT)
(74) Representative: Quinterno, Giuseppe
(86) International application number: EP9202468
(87) International publication number: WO9309482

(56) References cited:
- TECHNISCHE RUNDSCHAU. vol. 80, no. 47, 18 November 1988, BERN CH pages 26 - 29 , XP65194 STEPHAN ACEL, WOLFGANG HUBER 'Von der Konstruction direct zur NC- Maschine'
- MACHINE DESIGN vol. 62, no. 15, 26 July 1990, CLEVELAND US pages 50 - 61 , XP148354 JOHN KROUSE, PAUL DVORAK 'Successfully applying CAD/CAM'
- WERKSTATT UND BETRIEB. vol. 122, no. 6, June 1989, MUNCHEN DE pages 93 - 98 , XP46763 A. HOFMANN 'CAD/CAM-Einsatz bei einem Werkzeug-, Form- und Modellbauer fuer die Automobilindustrie'
- ZWF ZEITSCHRIFT FUER WIRTSCHAFTLICHE FERTIGUNG vol. 84, no. 1, January 1989, MUENCHEN DE pages 38 - 42 , XP8699 DR.-ING. W. WALTER 'CAD-NC-Kopplung mit CAD- Funktionalitaet'

## Description

The present invention relates to a tool working system, in particular a grinding system, for producing a workpiece such as a die for a motor vehicle body part, starting from a die blank of predetermined nominal shape and dimensions. In current known methods for the production of such a die, the design is first drawn up and, then, a mathematical model thereof is defined, for example by means of currently available modern CAD (Computer Aided Design) instruments.

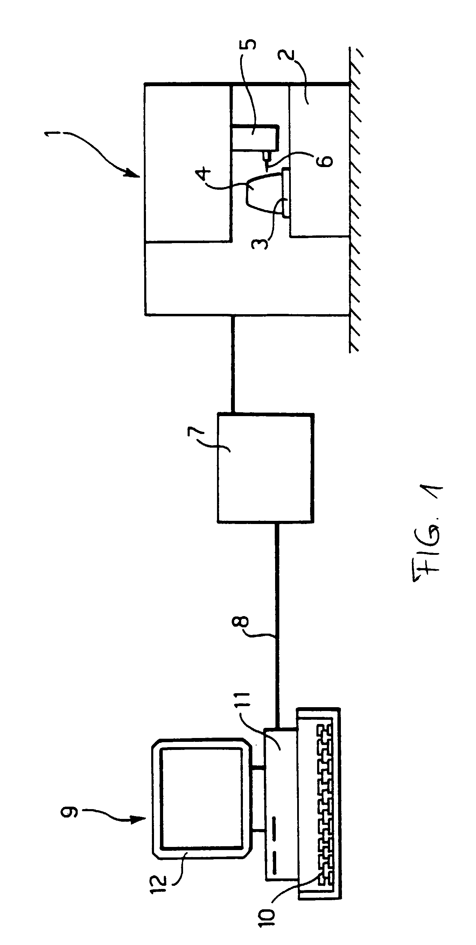

The mathematical model, usually integrated with the shape of any possible ancillary surfaces (surfaces outside the drawing) is utilised for the subsequent generation of a part program and for definition of the track or path intended to be followed by the tool of the machine utilised. This path is defined in relation to the nominal dimensions of the die blank from which the desired shape is to be formed by working with the tool, the type of tool provided, the acceptable tolerance limits, the type of tool movements etc.

Once the programme relating to the tool path has been set us and checked this is transferred in the workshop to the numerical control system of the machine tool used. The working can then be started.

In the above described traditional method it can happen that the preliminarily programmed path of the tool is not entirely adequate effectively to produce the desired shape. This may be for example because of the fact that the die blank used has dimensional characteristics which depart from the nominal characteristics taken into consideration in programming the path. This may mean for example that in order to produce the desired shape the machine must remove a greater amount of stock than that envisaged.

With the traditional method it is then necessary in this case to suspend working and proceed to re-programming of the working in such a way as to take into account the detected differences or errors or possibly other indications deriving from the operator's experience of the machine. Often the suspension of working also involves discarding the die blank from the machine, from where this can possibly be used for other purposes whilst re-programming of the tool path proceeds. Once this re-programming is finished the renewed numerically controlled working then generally requires a new loading and repositioning of a die blank into the machine.

In such cases the re-programming of the numerically controlled working may take place after a damaging event has occurred, such as damage to the die blank being worked, damage to the machine tool or breakage of the tool etc, and in any event every tool path reprogramming intervention involves stopping the machine tool and this is detrimental to the efficient productivity of the workshop and creates problems from the point of view of achieving smooth activity.

With the above described traditional approach the machine tool operator is relegated to a secondary, passive role, and his specific know how is only employed and marginally.

Technische Rundschau, Vol. 80, No.47, 18.11.1988, Bern (CH), pages 26-29, XP65194 discloses an integrated CAD/CAM system which allows to "construct" a desired shape at a CAD station without having to prepare a preliminary, traditional drawing. The shape is constructed directly on the video screen of the CAD station. Besides the geometric definition of the desired shape, also working parameters are input. After all the geometric and working parameters have been entered by means of a keyboard of the CAD station, an associated computer automatically generates a working plan and an NC program which can be either transferred onto a punched or magnetic tape, or directly stored in the memory of an NC-machine tool. In this latter case the NC-machine tool can directly perform the NC-program, i.e. machine a blank to produce a first workpiece, while at the same time (i.e. in parallel) the CAD station can print or plot the drawing of the said workpiece.

The object of the present invention is to provide a tool working system which makes it possible to obviate the disadvantages of the previously described prior art.

This object is achieved according to the invention by means of a working system of the type previously described, the principal characteristic of which lies in the fact that it comprises in combination
a machine tool, in particular a grinding machine, with an associated computerised numerical control system adapted to control the operation of the machine tool on the basis of input information relating to the intended paths to be followed by the tool; and
a CAD work station of interactive graphic type, including an electronic unit with associated memory means adapted to store a predefined mathematical model of the shape to be formed, said electronic unit being adapted for two-way communication with the numerical control system of the machine tool according to predefined protocols; the said unit being pre-arranged to determine, on the basis of the said mathematical model and of the nominal geometric characteristics of the blank workpiece, coordinates of the points which define the paths intended to be followed by the tool of the said machine for working the said blank workpiece, and for transmitting to the numerical control system of the machine tool the- coordinates of the points of the said paths gradually as they are calculated, for immediate execution by the machine tool; and
control means actuable by an operator, adapted to allow interaction with the said unit to modify and integrate in real time , on the basis of observation of the work in progress on the blank workpiece, the paths of the tool calculated by the said unit. With the system according to the invention re-programming of the tool paths may become necessary can be made in real time, directly on the machine tool.

The system of the invention therefore makes it possible overall to optimise the use of the numerically controlled machine tool and moreover makes it possible to make the best use of the knowledge and experience of the employee operating the system.

Further characteristics and advantages of the invention will become apparent from the following detailed description, made with reference to the attached drawing, provided purely by way of non limitative example, in which a real time grinding system formed according to the invention is schematically illustrated.

In the drawing the reference numeral 1 generally indicates a machine tool, in particular a grinding machine, with a bed 2, a workpiece-carrier platform 3 on which is mounted a blank work piece 4, and a movable head 5, movable along three or five axes, which carries the tool 6.

The machine 1 has associated. with it a computerised numerical control system indicated 7. By means of a line 8 a CAD work station 9 of interactive graphic type is coupled to this computerised numerical control system. In the exemplary embodiment illustrated the work station 9 comprises a keyboard, a computer 11 with annexed memory devices, and a video display 12.

In the memory devices associated with the computer of the work station 9 there is stored a predefined mathematical model of the shape of the work piece, model or die to be produced.

With known programming techniques the computer 11 is arranged to determine, on the basis of the mathematical model of the shape to be produced and of the nominal geometrical characteristics of the blank work piece 4, the coordinates of the points which define the paths intended to be followed by the tool 6 of the machine 1 for the purpose of being able to produce the desired shape from the said blank work piece.

The unit 11 is moreover conveniently arranged for two-way communication through the line 8 with the computerised numerical control system 7 of the machine 1, according to predefined protocols. Moreover, the said unit is pre-arranged, by means of suitable software, for transmitting to the numerical control system 7 of the machine 1 the coordinates of the points of the tool paths gradually as these are calculated, for their immediate execution by the machine.

In the above-described system the working, in particular the grinding of the blank work piece 4, therefore takes place in real time.

Conveniently, by means of suitable applications software, the unit 11 of the work station 9 is arranged to allow modification and/or integration in real time, on the basis of direct observation of the work in progress on the blank work piece, the paths of the tool which from time to time are calculated to compensate possible inadequacies of the said paths which must have arisen, for example, by the effect of discrepancies in the effective geometric dimensions of the blank work piece with respect to its real geometric dimensions, or for other reasons.

With the system of the invention, however, when such inadequacies become apparent, it is not necessary to stop the machine tool and reprogramme the paths, but rather such inadequacies can be immediately rectified in real time. This makes it possible to optimise the use of the machine tool and also makes it possible to avoid having to proceed to redefinition of the work plans of the machine and/or of the workshop.

The work station 9 can for example be an SUN work station with Computervision CAD software or with other specific applications software. The machine tool 1 for example be a grinding machine produced by JOBS, and the associated computerised numerical control system 7 may be a Fidia CNC2O system.

## Claims

1. A tool working system, in particular a grinding system, for the production of a workpiece such as a die for a motor vehicle body part, starting from a blank workpiece (4) of predefined nominal shape and dimensions, wherein the system comprises, in combination
a machine tool (1), in particular a grinding machine, with an associated computerised numerical control system (7) adapted to control the operation of the machine tool (1) on the basis of input information relating to the intended paths to be followed by the tool (6);
a CAD work station (9) of interactive graphic type, including an electronic unit (11) with associated memory means adapted to store a predefined mathematical model of the shape to be produced, said electronic unit (11) being adapted for two-way communication with the numerical control system (7) of the machine tool (1) according to predefined protocols; the said unit (11) being pre-arranged to determine, on the basis of the said mathematical model and of the nominal geometric characteristics of the blank workpiece (4), coordinates of the points which define the paths intended to be followed by the tool (6) of the said machine (1) for working the blank workpiece (4), the tool working system being characterised by the CAD work station transmitting to the numerical control system (7) of the machine (1) the coordinates of the points of the said paths, gradually as they are calculated, for their immediate execution by the machine (1); and by
control means (10) actuable by an operator and adapted to allow interaction with the said unit (11) to modify and integrate in real time, on the basis of observation of the work in progress on the blank workpiece (4), the paths of the tool (6) calculated by the said unit (11).

## Patentansprüche

1. Werkzeugarbeitssystem, insbesondere ein Schleifsystem, für die Herstellung eines Werkstückes wie beispielsweise eines Prägestempels für ein Motorfahrzeugteil, beginnend beim rohen Werkstück (4) mit vordefinierter Sollform und vordefinierten Sollmaßen, wobei das System in Kombination umfaßt
eine Werkzeugmaschine (1), insbesondere eine Schleifmaschine, mit einem damit verbundenen computerisierten, numerischen Steuersystem (7), geeignet den Betrieb der Werkzeugmaschine (1) auf Basis eingehender Information bezüglich des beabsichtigten Weges, dem das Werkzeug (6) folgen soll, zu steuern;
eine interaktive, graphische CAD-Arbeitsstation (9), die eine elektronische Einheit (11) mit damit verbundenen Speichermitteln umfaßt, welche geeignet sind, ein vordefiniertes mathematisches Modell der herzustellenden Form zu speichern, wobei die elektronische Einheit (11) zur dialogfähigen Kommunikation mit dem numerischen Steuersystem (7) der Werkzeugmaschine (1) gemäß einem vordefinierten Protokoll geeignet ist und voreingerichtet ist, auf der Basis des mathematischen Modells und der geometrischen Sollwerte des rohen Werkstückes Koordinaten jener Punkte zu bestimmen, die den beabsichtigten Weg, dem das Werkzeug (6) der Werkzeugmaschine (1) zur Bearbeitung des rohen Werkstückes (4) folgen soll, definieren, wobei das Werkzeugarbeitssystem dadurch gekennzeichnet ist,
daß die CAD-Arbeitsstation die Koordinaten der Punkte des Weges nach und nach, so wie sie berechnet werden, zu ihrer unmittelbaren Ausführung durch die Maschine (1) an das numerische Steuersystem (7) überträgt und
daß durch einen Bedienmann betätigbare Steuermittel (10) vorgesehen sind, die eine Interaktion mit der Einheit (11) erlauben, um den Weg des Werkzeuges (6), der von der Einheit (11) errechnet wird, auf Basis der Beobachtung der am rohen Werkstück (4) ablaufenden Bearbeitung zu verändern und in Echtzeit einzugreifen.

## Revendications

1. Système d'usinage à l'outil, en particulier un système de meulage destiné à produire une pièce telle qu'une matrice pour une pièce de carrosserie de véhicule automobile, en partant d'une pièce (4) formant ébauche ayant une forme et des dimensions nominales prédéfinies, dans lequel le système comprend, en combinaison :
une machine-outil (1), en particulier une machine à meuler, avec un système de commande numérique à ordinateur (7) qui y est associé, adapté pour commander le fonctionnement de la machine-outil (1) sur la base d'une information d'entréé relative aux trajets qui doivent être suivis par l'outil (6) ; et
une station de travail CAO (9) du type graphique interactif comprenant une unité électronique (11) à laquelle sont associés des moyens de mémoire adaptés pour stocker un modèle mathématique préalablement défini de la forme à produire, ladite unité électronique (11) étant adaptée pour une communication à deux canaux avec le système de commande numérique (7) de la machine-outil (1), selon des protocoles préalablement définis ; ladite unité (11) étant pré-agencée pour déterminer, sur la base dudit modèle mathématique et des caractéristiques géométriques nominales de la pièce (4) formant ébauche, les coordonnées des points qui définissent les trajets qui doivent être suivis par l'outil (6) de ladite machine (1), pour usiner la pièce (4) formant ébauche, le système d'usinage à l'outil étant caractérisé par le fait que la station de travail CAO transmet au système de commande numérique (7) de la machine (1) les coordonnées des points desdits trajets au fur et à mesure qu'ils sont calculés, pour l'exécution immédiate par la machine (1) ; et par
des moyens de commande (10) pouvant être actionnés par un opérateur, adaptés pour permettre une interaction avec ladite unité (11) pour modifier et intégrer en temps réel, sur la base de l'observation du travail en cours de progression sur la pièce (4) formant ébauche, les trajets de l'outil (6) calculés par ladite unité (11).
